# EUROPÄISCHE PATENTSCHRIFT

(11) **EP 1 479 902 B1**
(45) Veröffentlichungstag und Bekanntmachung des Hinweises auf die Patenterteilung: **17.08.2005**
(21) Anmeldenummer: 04003449.8
(22) Anmeldetag: 17.02.2004
(51) Int. Cl.: F02M 25/07, F02M 35/10

(54) **Luftansaugkanalsystem für eine Verbrennungskraftmaschine**
Air intake system for internal combustion engine
Circuit d'admission d'air d'un moteur à combustion interne

(30) Priorität: 14.05.2003 DE 10321533
(43) Veröffentlichungstag der Anmeldung: 24.11.2004
(73) Patentinhaber: Pierburg GmbH, 41460 Neuss (DE)
(72) Erfinder: Thönnessen, Dieter, 41751 Viersen (DE); Schürfeld, Armin, 40670 Meerbusch (DE)
(74) Vertreter: Ter Smitten, Hans

(56) Entgegenhaltungen:
- EP-A- 1 010 889
- EP-A- 1 048 839
- EP-A- 1 059 435
- US-A- 3 937 196
- PATENT ABSTRACTS OF JAPAN vol. 2003, no. 07, 3. Juli 2003 (2003-07-03) -& JP 2003 074430 A (HONDA MOTOR CO LTD), 12. März 2003 (2003-03-12)

## Beschreibung

Die Erfindung betrifft ein Luftansaugkanalsystem für eine Verbrennungskraftmaschine, welches ein Gehäuse aufweist, in dem ein Sammeleinlaßkanal, einzelne zu Zylindern der Verbrennungskraftmaschine führende Luftansaugkanäle und ein im Querschnitt zur Strömungsrichtung einseitig offen ausgebildeter Abgasrückführkanal ausgebildet sind, wobei im Abgasrückführkanal eine mit diesem korrespondierende Wärmeübertragungseinheit angeordnet ist.

Solche Luftansaugkanalsysteme mit integrierten Abgasrückführkanälen sind allgemein bekannt. Auch die Integration einer Kühlvorrichtung in das Luftansaugkanalsystem zur Kühlung des dem Verbrennungsmotor zugeführten Abgases zum Zweck der Reduzierung der NOₓ-Emissionen wird in verschiedenen Anmeldungen offenbart.

So beschreibt die EP 1 059 435 A2 ein mehrteiliges Luftansaugkanalsystem bei dem ein Kühlmittelkanal und ein Abgaskanal in einem Teil des Luftansaugkanaigehäuses ausgebildet sind. Dabei wird der Abgaskanal durch einen Deckel, der am Gehäuse durch Schrauben befestigt wird, verschlossen. Der Kühlmittelkanal liegt zwischen dem luftführenden Gehäuse und dem Abgasrückführkanal, wobei Rippen in den Bereich des Abgasrückführkanals zur besseren Wärmeübertragung reichen. Die Wärmeübertragungseinheit ist also einstückig mit einem Teil des Luftansaugkanalgehäuses ausgebildet.

Nachteilig an einer solchen Ausführung ist der sehr schlechte Wärmeübergang durch den Abstand des Kühlmittel führenden Kanals vom Abgas führenden Kanal. Auch die Kühlmittelkanalgeometrie ist nicht optimal gestaltet. Des weiteren besteht eine Umlenkung des Abgaskanals, wodurch mit einer deutlichen Erhöhung des Druckverlustes und der Verrußung der vorhandenen Lamellen der Kühlvorrichtung aufgrund entstehender Wirbel zu rechnen ist.

In der US 3,937,196 wird ebenfalls ein Luftansaugkanalsystem mit integriertem Abgasrückführkanal und einer integrierten Kühlvorrichtung beschrieben. Der kühlmittelführende Kanal ist dabei im Abgasrückführkanal angeordnet, allerdings wird auch hier ein optimaler Wärmeübergang durch nicht optimierte Geometrie der Wärmeübertragungseinheit verhindert. Des weiteren entstehen hohe Montagekosten da der Zusammenbau der Kühlvorrichtung mit dem Luftansaugkanalgehäuse über eine Öffnung im Luftansaugkanalgehäuse in Strömungsrichtung erfolgt. Gleichzeitig muß der Abgasrückführkanal gegenüber dem kühlflüssigkeitsführenden Kanal durch Dichtungen verschlossen werden, die beim Einschub der Kühlvorrichtung durch die angesprochene Öffnung mit eingeschoben werden müssen. Ein zuverlässiger und dichter Sitz dieser Dichtungen kann aufgrund der Nichterreichbarkeit bei einer solchen Ausführung nicht sicher gestellt werden. Des weiteren werden zusätzliche Bauteile benötigt, über die die Kühlvorrichtung im Abgasrückführkanal befestigt werden muß und über die der kühlmittelführende Kanal nach Einbau der Kühlvorrichtung verschlossen werden muß. Bei einem solchen Aufbau ist es nicht gewährleistet, daß die vorhandenen Halterungen bei auftretenden Vibrationen, wie sie im Motorraum üblich sind, eine ausreichende Dichtigkeit und Festigkeit über einen längeren Zeitraum gewährleisten. Zusätzlich gestaltet sich der notwendige Anschluß der Kühlwasserstutzen zur Kühlvorrichtung schwierig und montagetechnisch aufwendig.

Aufgabe der Erfindung ist es daher, die genannten Nachteile zu vermeiden und ein Luftansaugkanalsystem mit Kühlvorrichtung zu schaffen, welches einfach und kostengünstig herzustellen ist und eine Kühlvorrichtung mit optimierten Wärmeübergangsstrukturen aufweist, wobei die Montage der Kühlvorrichtung in einem Abgasrückführkanal vereinfacht werden soll. Des weiteren soll ein dichter Verschluß der gasführenden und kühlflüssigkeitsführenden Leitungen gewährleistet werden. Weiteres Ziel ist es, den Strömungswiderstand im Abgaskanal und im Kühlwasserkanal möglichst gering zu halten und eine möglichst lange Lebensdauer der gesamten Einheit sicher zu stellen.

Diese Aufgabe wird dadurch gelöst, daß die Wärmeübertragungseinheit ein erstes Teil einer Kühlvorrichtung bildet und den Abgasrückführkanal verschließt wobei die Wärmeübertragungseinheit einen von Kühlflüssigkeit durchströmten Kühlkanal aufweist, der im Querschnitt zur Strömungsrichtung einseitig offen ausgebildet ist und der durch ein zweites Teil der Kühlvorrichtung verschlossen ist.

Hierdurch wird es möglich sowohl einfache Herstellverfahren zur Herstellung der einzelnen Teile zu verwenden als auch eine gut zugängliche und preiswerte Montage der Kühlvorrichtung sicher zu stellen. Des weiteren wird durch die Lage des Kühlkanals im Abgasrückführkanal ein guter Wärmeübergang sicher gestellt.

Für eine weitere Optimierung des Wärmeübergangs wird der Kühlkanal im wesentlichen zentral im Abgasrückführkanal angeordnet.

In einer bevorzugten Ausführungsform weist die Wärmeübertragungseinheit eine Flanschplatte auf, über die der Verschluß des Abgasrückführkanals erfolgt, und das zweite Teil der Kühlvorrichtung weist eine zweite Flanschplatte und an den in Strömungsrichtung gegenüberliegend angeordneten Enden einen anpassbaren Kühlflüssigkeitseinlaßstutzen und einen anpassbaren Kühlflüssigkeitsauslaßstutzen auf, wobei zumindest im Bereich zwischen den Stutzen der Verschluß des Kühlkanals über die zweite Flanschplatte erfolgt. Durch diese Ausführungsform wird eine einfache Herstellung und eine einfache Montage der Einzelteile im Luftansaugkanalsystem kostengünstig sicher gestellt.

Vorteilhafterweise verschließt die Flanschplatte des zweiten Teils den Kühlkanal umlaufend, wodurch ein dichter Verschluß mit langer Lebensdauer herstellbar ist.

In einer weiterführenden alternativen Ausführungsform ist zwischen Frischluft führenden Kanälen des Luftansaugkanalsystems und dem Abgasrückführkanal des Luftansaugkanalsystems ein zweiter Kühlkanal angeordnet, der die Frischluft führenden Kanäle von dem Abgasrückführkanal thermisch trennt. Hierdurch wird eine Wärmeübertragung zwischen der Frischluft des Ansaugsystems und dem heißen Abgas verhindert.

Vorteilhafterweise ist der zweite Kühlkanal von der Kühlflüssigkeit zwangsdurchströmt, wobei die Flanschplatte des zweiten Teils der Kühlvorrichtung im Bereich des Einlaß- und des Auslaßstutzens jeweils eine Ausbuchtung aufweist, so daß lediglich in diesen Bereichen eine fluidische Verbindung zwischen dem ersten und zweiten Kühlmittelkanal besteht. Auf diese Weise wird die Wärmeabfuhr über den zweiten Kühlkanal sicher gestellt und es wird durch entsprechende Anordnung der Stutzen und der Ausbuchtung möglich, eine definierte Menge Kühlflüssigkeit durch den zweiten Kanal strömen zu lassen, ohne auf eine kostengünstige einfache Bauweise verzichten zu müssen.

In einer bevorzugten Ausführungsform verschließt die Flanschplatte des zweiten Teils der Kühlvorrichtung die beiden Kühlkanäle umlaufend, so daß keine zusätzlichen Bauteile benötigt werden.

Zur Sicherung eines festen und dichten Sitz mit langer Lebensdauer sind die Verschlüsse der durchströmten Kanäle durch stoffschlüssige Verbindungen hergestellt, so daß keine zusätzlichen Dichtungen erforderlich sind.

In einer bevorzugten Ausführungsform werden diese stoffschlüssigen Verbindungen durch Schweißverbindungen insbesondere Reibrührschweißen hergestellt, wodurch ein dauerhafter dichter Verschluß gewährleistet wird.

In einer optimierten Ausführungsform der Wärmeübertragungseinheit bildet eine in Strömungsrichtung geradlinig verlaufende und im Querschnitt im wesentlichen rechteckig ausgebildete Nut den Kühlkanal. Durch eine solche Form des Kühlkanals wird eine sehr große Oberfläche zur Wärmeübertragung zur Verfügung gestellt, so daß das Verhältnis Fläche zu Volumen sehr günstig ist und mit einer relativ geringen Kühlmittelmenge die erforderliche Abkühlung des Abgases erreichbar ist. Des weiteren kann hierdurch die Kühlvorrichtung relativ kurz ausgeführt werden. Es treten bei einer solchen Ausführungsform geringe Strömungswiderstände auf, so daß auch die Pumpleistung der Kühlmittelpumpe entsprechend beschränkt werden kann.

Vorteilhafterweise weist die Wärmeübertragungseinheit zur Abgasseite hingerichtete Kühlrippen auf, um zusätzlich den Wärmeübergang zu optimieren.

In einer optimierten Ausführung sind die Kühlrippen in Strömungsrichtung strukturiert ausgebildet, wobei die durchströmte Querschnittsfläche im wesentlichen in Strömungsrichtung gleich bleibt, wodurch einer möglichen Verrußung der Kühlrippen durch an den Strukturen entstehende Wirbel entgegen gewirkt wird, ohne zusätzliche Strömungswiderstände aufzubauen.

Zur weiteren Optimierung des Wärmeübergangs innerhalb des Kühlkanals kann dieser zumindest einen in Strömungsrichtung des Kühlkanals verlaufenden Steg aufweisen.

Des weiteren kann die Flanschplatte des zweiten Teils der Kühlvorrichtung zwischen dem Einlaßstutzen und dem Auslaßstutzen einen zum Kühlkanal weisenden und in Strömungsrichtung verlaufenden Steg aufweisen, wodurch wiederum der Wärmeübergang innerhalb des Kühlkanals verbessert würde.

In einer zum letztgenannten Punkt alternativen Ausführungsform weist das Flanschteil des zweiten Teils der Kühlvorrichtung in Strömungsrichtung kurz vor den Kühlflüssigkeitsauslaßstutzen einen Steg auf, so daß die Durchströmgeschwindigkeit der Kühlflüssigkeit an dieser Stelle deutlich angehoben wird und auf diese Weise eventuell gebildete Luftblasen im Kühlkanal durch diese Querschnittsverengung aus dem Kühlkanal herausströmen.

Vorteilhafterweise sind das Gehäuse des Luftansaugkanalsystems und die Kühlvorrichtung im Gußverfahren hergestellt, wobei zumindest ein Teil des Gehäuses des Luftansaugkanalsystems einteilig mit dem Abgasrückführkanal und gegebenenfalls den zweiten Kühlkanal gegossen ist. Eine solche Herstellung bietet sich aufgrund der vorhandenen Ausführungsformen insoweit an, als das hierdurch eine preisgünstige und qualitativ hochwertige Einheit mit wenigen Bauteilen geschaffen werden kann.

In einer weiterführenden Ausführung handelt es sich um ein Druckgußverfahren insbesondere Aluminiumdruckguß. Dies entspricht den heutigen Anforderungen, Luftansaugkanalsysteme in Leichtbauweise herzustellen.

Zur Verminderung der Bauteileanzahl kann das Luftansaugkanalsystem zusätzlich eine integrierte Drosselklappeneinheit und ein integriertes Abgasrückführventil aufweisen, so daß eine gesamte Funktionseinheit in Modulbauweise angeboten und aufeinander abgestimmt werden kann.

Durch all diese Ausführungsformen werden Luftansaugkanalsysteme zur Verfügung gestellt, die kostengünstig herstellbar und montierbar sind, einen optimalen Wärmeübergang sicher stellen und praktisch wartungsfrei über eine lange Lebensdauer genutzt werden können. Durch optimierte Geometrien sinken die Verrußungsgefahr und der Strömungswiderstand. Zusätzlich werden Wechselwirkungen zwischen den luftführenden und den abgasführenden Leitungen verhindert. Alle Bauteile sind durch einfach entformbare Gußteile herzustellen.

Ein Ausführungsbeispiel ist in den Figuren dargestellt und wird nachfolgend beschrieben.

Figur 1 zeigt ein erfindungsgemäßes Luftansaugkanalsystem in Seitenansicht.

Figur 2 zeigt in einer weiteren Seitenansicht das erfindungsgemäße Luftansaugkanalsystem in geschnittener Darstellung.

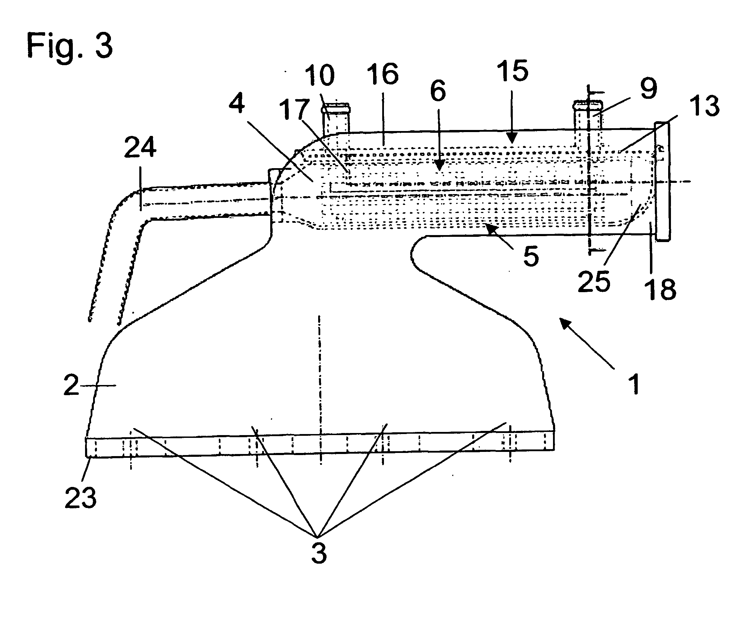

Figur 3 zeigt eine Draufsicht des erfindungsgemäßen Luftansaugkanatsystems.

Das in den Figuren dargestellte erfindungsgemäße Luftansaugkanalsystem 1 für eine Verbrennungskraftmaschine besteht aus einem Gehäuse 2, in welchem die einzelnen zu den Zylindern der Verbrennungskraftmaschine führenden Luftansaugkanäle 3 sowie ein Abgasrückführkanal 4 angeordnet sind. Im Abgasrückführkanal 4 ist eine Kühlvorrichtung 5 angeordnet.

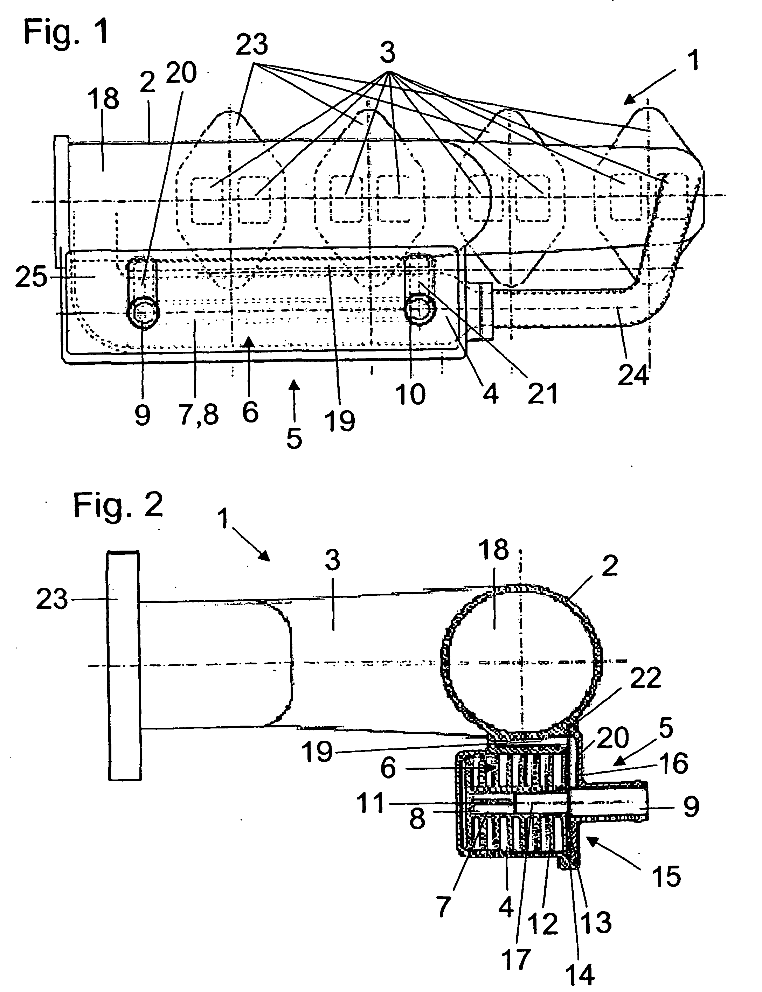

Wie insbesondere aus Figur 2 ersichtlich wird, ist diese Kühlvorrichtung 5 zweiteilig ausgeführt, wobei ein erstes Teil im wesentlichen die Wärmeübertragungseinheit 6 bildet, in deren Innern ein Kühlkanal 7 angeordnet ist. Dieser Kühlkanal 7 ist zentral im Abgasrückführkanal angeordnet und besteht im wesentlichen aus einer Nut 8, welche im dargestellten Querschnitt rechteckig ausgebildet ist und von einem Einlaßstutzen 9 für die Kühlflüssigkeit bis zu einem Auslaßstutzen 10 reicht. Im Innern dieser rechteckig ausgebildeten Nut 8 ist ein Steg 11 angeordnet, welcher sich im wesentlichen über die gesamte Länge der Nut 8 erstreckt und den Wärmeübergang von der Kühlflüssigkeit auf die Wandungen der Kühlvorrichtung 5 verbessert. Die Kühlvorrichtung 5 weist in den Abgasrückführkanal 4 weisende Kühlrippen 12 auf, die sich ebenfalls in Strömungsrichtung erstrecken und gegebenenfalls in Strömungsrichtung strukturiert ausgebildet sind, um einer Verrußung der Rippen 12 durch Wirbelbildung an den Oberflächen und durch Auflösung der sich bildenden Grenzschichten im Abgasrückführkanal 4 entgegen zu wirken. Der Abgasrückführkanal 4 ohne die Kühlvorrichtung 5 ist im Querschnitt offen ausgeführt. Er wird jedoch durch den Einbau der Wärmeübertragungseinheit 6 verschlossen. Dazu weist die Wärmeübertragungseinheit 6 eine Flanschplatte 13 auf, deren Größe im wesentlichen dem offenen Abschnitt des Abgasrückführkanals 4 entspricht und in der dargestellten Ausführungsform diesen durch eine Reibrührschweißverbindung 14 der Flanschplatte 13 mit den offenen Wandenden des Abgasrückführkanals 4 dicht verschließt.

Die Nut 8 des Kühlkanals 7 der Wärmeübertragungseinheit 6 ist zu der gleichen Seite wie der Abgasrückführkanal 4 offen ausgebildet. Zum Verschluß des Kühlkanals 7 wird ein zweites Teil 15 der Kühlvorrichtung 5 auf die Wärmeübertragungseinheit 6 aufgesetzt und zwar in der Weise, daß der Kühlkanal 7 im wesentlichen, d. h. zwischen dem Kühlflüssigkeitseinlaßstutzen 9 und dem Kühlflüssigkeitseinlaßstutzen 10 durch eine Flanschplatte 16 dieses zweiten Teils 15 verschlossen wird. Neben den an die jeweils vorhandenen Anschlüsse der Motorkühlung anpassbaren Kühlflüssigkeitseinlaßstutzen 9 bzw. Kühlflüssigkeitseinlaßstutzen 10 weist die Flanschplatte 16 einen Steg 17 auf, der kurz vor dem Kühlflüssigkeitsauslaßstutzens 10 in den Kühlkanal 7 hineinragt. Hierdurch wird an dieser Stelle die Strömungsgeschwindigkeit der Kühlflüssigkeit deutlich erhöht, so daß Luftblasen insbesondere bei für die Kühlvorrichtung 5 ungünstiger Einbaulage im Motorraum ausgetragen werden können.

Ebenfalls aus Figur 2 wird deutlich, daß zwischen einem frischluftführenden Sammeleinlaß 18 des Luftansaugkanalsystems 1 und dem Abgasrückführkanal 4 ein weiterer Kanal angeordnet ist, der den Sammeleinlaßkanal 18 vom Abgasrückführkanal 4 thermisch trennt und als zweiter Kühlkanal 19 dient. Dieser Kühlkanal 19 erstreckt sich parallel zum ersten Kühlkanal 7 zwischen den beiden Stutzen 9 und 10. Die Versorgung dieses zweiten Kühlkanals 19 mit Kühlflüssigkeit erfolgt, wie der des ersten Kühlkanals 7, über den Einlaßstutzen 9 und einer in der Flanschplatte 16 angeordneten Ausbuchtung 20, so daß Kühlflüssigkeit vom Einlaßstutzen 9 über die Ausbuchtung 20 in den zweiten Kühlkanal 19 strömen kann. Dazu sind der Einlaßstutzen 9 und die Ausbuchtung 20 so angeordnet, daß der Kühlflüssigkeitsstrom sich in einer definierten Menge zwischen den beiden Kühlkanälen 7, 19 aufteilt. Im Bereich zwischen Einlaßstutzen 9 und Auslaßstutzen 10 sind die beiden Kühlkanäle 7,19 durch die Flanschplatte 16 voneinander getrennt, wobei eine zweite Ausbuchtung 21 im Bereich des Auslaßstutzens 10 entsprechend der Ausbuchtung 20 im Bereich des Einlaßstutzens 9 angeordnet ist, damit die im zweiten Kühlkanal 19 strömende Flüssigkeit über den Aulaßstutzen 10 aus der Kühlvorrichtung 5 abströmen kann. Die Kühlvorrichtung 5 bzw. die Kühlkanäle 7,17 werden durch die zum zweiten Teil 15 der Kühlvorrichtung 5 gehörende Flanschplatte 16 dicht mit den Wandenden des Abgasrückführkanals 4 bzw. des Gehäuses 2 des Luftansaugkanalsystems 1 durch eine zweite Reibrührschweißverbindung 22 verschlossen. Auch diese Verbindung 22 erfolgt umlaufend um die gesamte Flanschplatte 16, so daß ein sicherer und vor allem dichter Verschluß der Kühlkanäle 7, 19 gewährleistet ist.

Der Kreislauf der Frischluft bzw. des Abgases erfolgt nun in nachfolgend beschriebener Weise. Über einen nicht dargestellten Drosselklappenstutzen, der auch im Luftansaugkanalsystem 1 integriert sein kann, strömt Luft in den Sammeleinlaßkanal 18 und von dort über die Luftansaugkanäle 3 zu den nicht dargestellten Zylindern der Verbrennungskraftmaschine. Das in den Zeichnungen dargestellte Luftansaugkanalgehäuse 2 weist zur Befestigung des Luftansaugkanalsystems 1 an die Zylinder der Verbrennungskraftmaschine jeweils Flanschplatten 23 auf. Das durch die Verbrennung im Zylinder erzeugte Abgas strömt zumindest teilweise über ein ebenfalls nicht dargestelltes Abgasrückführventil, welches auch in das Luftansaugkanalgehäuse 2 integriert oder zumindest an ihm angebaut sein kann, über eine Abgasrückführleitung 24 in den Bereich des Abgasrückführkanals 4 bzw. der Kühlvorrichtung 5. Gleichzeitig wird Kühlflüssigkeit über eine nicht dargestellte Pumpe und über den Einlaßstutzen 9 in die beiden Kühlkanäle 7 und 19 gepumpt, so daß ein Wärmeaustausch zwischen dem Abgas und der Kühlflüssigkeit im Bereich der Wärmeübertragungseinheit 6 stattfinden kann. Während die Kühlflüssigkeit zum Kühlflüssigkeitsauslaßstutzen 10 und von dort in den weiteren Kühlkreislauf der Verbrennungskraftmaschine bzw. zur Pumpe gelangt, wird das nunmehr gekühlte Abgas über eine weitere Abgasrückführleitung 25, welche im Luftansaugkanalsystem 1 integriert ist, in den Sammeleinlaßkanal 18 zurückgeführt.

Durch eine solche Ausführung kann mit Hilfe rückgeführten Abgases der Ausstoß an Schadstoffen, insbesondere an NOₓ aus dem Motor deutlich reduziert werden.

Die beschriebene Ausführungsform des Lufteinlaßkanalsystems ist kostengünstig herzustellen und weist einen sehr guten Wirkungsgrad bezüglich der Kühlung des Abgases auf. Aus den Zeichnungen wird deutlich, daß eine sehr gute Entformbarkeit jedes einzelnen Bauteils gegeben ist, so daß die Bauteile in einem kostengünstigen Druckgußverfahren hergestellt werden können. Durch den hohen Wirkungsgrad der Kühlvorrichtung kann diese relativ kurz ausgeführt werden, so daß Bauraum eingespart werden kann.

Änderungen bezüglich der Anordnung des Abgasrückführkanals im Luftansaugkanalsystem sind dabei ebenso denkbar, wie eine Übertragung der beschriebenen Kühlvorrichtung auf ein Luftansaugkanalsystem für einen Motor anderer Bauart und werden durch den Schutzumfang der Ansprüche erfaßt.

## Patentansprüche

1. Luftansaugkanalsystem für eine Verbrennungskraftmaschine, welches ein Gehäuse (2) aufweist, in dem ein Sammeleinlaßkanal (18), einzelne zu Zylindern der Verbrennungskraftmaschine führende Luftansaugkanäle (3) und ein im Querschnitt zur Strömungsrichtung einseitig offen ausgebildeter Abgasrückführkanal (4) ausgebildet sind, wobei im Abgasrückführkanal (4) eine mit diesem korrespondierende Wärmeübertragungseinheit (6) angeordnet ist, **dadurch gekennzeichnet, daß** die Wärmeübertragungseinheit (6) ein erstes Teil einer Kühlvorrichtung (5) bildet, und den Abgasrückführkanal (4) verschließt wobei die Wärmeübertragungseinheit (6) einen von Kühlflüssigkeit durchströmten ersten Kühlkanal (7) aufweist, der im Querschnitt zur Strömungsrichtung einseitig offen ausgebildet ist, und der durch ein zweites Teil (15) der Kühlvorrichtung (5) verschlossen sit.

2. Luftansaugkanalsystem nach Anspruch 1, **dadurch gekennzeichnet, daß** der Kühlkanal (7) im wesentlichen zentral im Abgasrückführkanal (4) angeordnet ist.

3. Luftansaugkanalsystem nach Anspruch 1 oder 2, **dadurch gekennzeichnet, daß** die Wärmeübertragungseinheit (6) eine Flanschplatte (13) aufweist, über die der Verschluß des Abgasrückführkanals (4) erfolgt, und daß das zweite Teil (15) der Kühlvorrichtung (5) eine zweite Flanschplatte (16) und an den in Strömungsrichtung gegenüberliegend angeordneten Enden einen anpassbaren Kühlflüssigkeitseinlaßstutzen (9) und einen anpassbaren Kühlflüssigkeitsauslaßstutzen (10) aufweist, wobei zumindest im Bereich zwischen den Stutzen (9,10) der Verschluß des Kühlkanals (5) über die zweite Flanschplatte (16) erfolgt.

4. Luftansaugkanalsystem nach Anspruch 3, **dadurch gekennzeichnet, daß** die Flanschplatte (16) des zweiten Teils (15) den Kühlkanal (7) umlaufend verschließt.

5. Luftansaugkanalsystem nach einem der Ansprüche 1 bis 3, **dadurch gekennzeichnet, daß** zwischen im wesentlichen Frischluft führenden Kanälen (3,18) des Luftansaugkanalsystems (1) und dem Abgasrückführkanal (4) des Luftansaugkanalsystems (1) ein zweiter Kühlkanal (19) angeordnet ist, der die Frischluft führenden Kanäle (3,18) vom Abgasrückführkanal (4) thermisch trennt.

6. Luftansaugkanalsystem nach Anspruch 5, **dadurch gekennzeichnet, daß** der zweite Kühlkanal (19) von der Kühlflüssigkeit zwangsdurchströmt ist, wobei die Flanschplatte (16) des zweiten Teils (15) der Kühlvorrichtung (5) im Bereich des Einlaßstutzens (9) und des Auslaßstutzens (10) jeweils eine Ausbuchtung (20,21) aufweist, so daß lediglich in diesen Bereichen eine fluidische Verbindung zwischen dem ersten Kühlkanal (7) und dem zweiten Kühlkanal (19) besteht.

7. Luftansaugkanalsystem nach Anspruch 6, **dadurch gekennzeichnet, daß** die Flanschplatte (16) des zweiten Teils (15) der Kühlvorrichtung (5) die beiden Kühlkanäle (7,19) umlaufend verschließt.

8. Luftansaugkanalsystem nach einem der vorhergehenden Ansprüche, **dadurch gekennzeichnet, daß** die Verschlüsse der durchströmten Kanäle (4,7,19) durch stoffschlüssige Verbindungen hergestellt sind.

9. Luftansaugkanalsystem nach Anspruch 8, **dadurch gekennzeichnet, daß** die stoffschlüssigen Verbindungen durch Schweißverbindungen (14,22) insbesondere Reibrührschweißen herstellbar sind.

10. Luftansaugkanalsystem nach einem der vorhergehenden Ansprüche, **dadurch gekennzeichnet, daß** eine in Strömungsrichtung geradlinig verlaufende, im Querschnitt im wesentlichen rechteckig ausgebildete Nut (8) in der Wärmeübertragungseinheit (6) den Kühlkanal (7) bildet.

11. Luftansaugkanalsystem nach einem der vorhergehenden Ansprüche, **dadurch gekennzeichnet, daß** die Wärmeübertragungseinheit (6) zur Abgasseite hin gerichtete Kühlrippen (12) aufweist.

12. Luftansaugkanalsystem nach Anspruch 11, **dadurch gekennzeichnet, daß** die Kühlrippen (12) in Strömungsrichtung strukturiert ausgebildet sind, wobei die durchströmte Querschnittsfläche im wesentlichen in Strömungsrichtung gleich bleibt.

13. Luftansaugkanalsystem nach einem der vorhergehenden Ansprüche, **dadurch gekennzeichnet, daß** die Wärmeübertragungseinheit (6) zumindest einen im Kühlkanal (7) angeordneten und in Strömungsrichtung des Kühlkanals (7) verlaufenden Steg (11) aufweist.

14. Luftansaugkanalsystem nach einem der Ansprüche 3 bis 13, **dadurch gekennzeichnet, daß** die Flanschplatte (16) des zweiten Teils (15) der Kühlvorrichtung (5) zwischen dem Einlaßstutzen (9) und dem Auslaßstutzen (10) einen in den Kühlkanal (7) weisenden und in Strömungsrichtung verlaufenden Steg aufweist.

15. Luftansaugkanalsystem nach einem der Ansprüche 3 bis 13, **dadurch gekennzeichnet, daß** die Flanschplatte (16) des zweiten Teils (15) der Kühlvorrichtung (5) in Strömungsrichtung kurz vor dem Auslaßstutzen (10) einen Steg (17) aufweist.

16. Luftansaugkanalsystem nach einem der vorhergehenden Ansprüche, **dadurch gekennzeichnet, daß** das Gehäuse (2) des Luftansaugkanalsystems (1) und die Kühlvorrichtung (5) im Gußverfahren hergestellt sind, wobei zumindest ein Teil des Gehäuses (2) einteilig mit dem Abgasrückführkanal (4) und gegebenenfalls dem zweiten Kühlkanal (19) gegossen ist.

17. Luftansaugkanalsystem nach Anspruch 16, **dadurch gekennzeichnet, daß** es sich bei dem Gußverfahren um ein Druckgußverfahren, insbesondere Aluminiumdruckguß handelt.

18. Luftansaugkanalsystem nach einem der vorhergehenden Ansprüche, **dadurch gekennzeichnet, daß** das Luftansaugkanalsystem (1) zusätzlich eine integrierte Drosselklappeneinheit und/oder ein integriertes Abgasrückführventil aufweist.

## Claims

1. An air intake duct system for an internal combustion engine, which comprises a housing (2), in which there are constructed an air inlet manifold (18), individual air intake ducts (3) leading to cylinders of the internal combustion engine and an exhaust gas recirculation duct (4) open on one side cross-sectionally relative to the direction of flow, a heat transfer unit (6) corresponding to the exhaust gas recirculation duct (4) being arranged in said duct (4), **characterised in that** the heat transfer unit (6) forms a first part of a cooling device (5) and closes the exhaust gas recirculation duct (4), wherein the heat transfer unit (6) comprises a first cooling duct (7) through which cooling fluid flows and which is open on one side cross-sectionally relative to the direction of flow, and which is closed by a second part (15) of the cooling device (5).

2. An air intake duct system according to claim 1, **characterised in that** the cooling duct (7) is arranged substantially centrally in the exhaust gas recirculation duct (4).

3. An air intake duct system according to claim 1 or claim 2, **characterised in that** the heat transfer unit (6) comprises a flange plate (13), by means of which the exhaust gas recirculation duct (4) is closed, and **in that** the second part (15) of the cooling device (5) comprises a second flange plate (16) and, at opposing ends in the flow direction, an adaptable cooling fluid inlet port (9) and an adaptable cooling fluid outlet port (10), wherein closure of the cooling duct (5) is effected by means of the second flange plate (16) at least in the area between the ports (9, 10).

4. An air intake duct system according to claim 3, **characterised in that** the flange plate (16) of the second part (15) closes the cooling duct (7) circumferentially.

5. An air intake duct system according to any one of claims 1 to 3, **characterised in that** a second cooling duct (19) is arranged between ducts (3, 18), substantially conveying fresh air, of the air intake duct system (1) and the exhaust gas recirculation duct (4) of the air intake duct system (1), which second cooling duct (19) thermally separates the fresh air-conveying ducts (3, 18) from the exhaust gas recirculation duct (4).

6. An air intake duct system according to claim 5, **characterised in that** the cooling fluid mandatorily flows through the second cooling duct (19), wherein the flange plate (16) of the second part (15) of the cooling device (5) comprises a bulge (20, 21) in the area of each of the inlet port (9) and the outlet port (10), such that only in these areas does a fluid connection exist between the first cooling duct (7) and the second cooling duct (19).

7. An air intake duct system according to claim 6, **characterised in that** the flange plate (16) of the second part (15) of the cooling device (5) circumferentially closes the two cooling ducts (7, 19).

8. , An air intake duct system according to any one of the preceding claims, **characterised in that** closure of the flowed-through ducts (4, 7, 19) is brought about by material bonding.

9. An air intake duct system according to claim 8, **characterised in that** material bonding may take the form of welded joints (14, 22), produced in particular by friction stir welding.

10. An air intake duct system according to any one of the preceding claims, **characterised in that** a cross-sectionally substantially rectangular groove (8) in the heat transfer unit (6) and extending in a straight line in the direction of flow forms the cooling duct (7).

11. An air intake duct system according to any one of the preceding claims, **characterised in that** the heat transfer unit (6) comprises cooling ribs (12) directed towards the exhaust gas side.

12. An air intake duct system according to claim 11, **characterised in that** the cooling ribs (12) are structured in the direction of flow, wherein the flowed-through cross-sectional area remains substantially constant in the direction of flow.

13. An air intake duct system according to any one of the preceding claims, **characterised in that** the heat transfer unit (6) comprises at least one web (11) arranged in the cooling duct (7) and extending in the direction of flow of the cooling duct (7).

14. An air intake duct system according to any one of claims 3 to 13, **characterised in that,** between the inlet port (9) and the outlet port (10), the flange plate (16) of the second part (15) of the cooling device (5) comprises a web pointing into the cooling duct (7) and extending in the direction of flow.

15. An air intake duct system according to any one of claims 3 to 13, **characterised in that** the flange plate (16) of the second part (15) of the cooling device (5) comprises a web (17) just upstream of the outlet port (10) in the direction of flow.

16. An air intake duct system according to any one of the preceding claims, **characterised in that** the housing (2) of the air intake duct system (1) and the cooling device (5) are produced by casting, wherein at least part of the housing (2) is cast in one piece with the outlet gas recirculation duct (4) and optionally the second cooling duct (19).

17. An air intake duct system according to claim 16, **characterised in that** the casting process is a die casting process, in particular aluminium die casting.

18. An air intake duct system according to any one of the preceding claims, **characterised in that** the air intake duct system (1) additionally comprises an integral throttle valve unit and/or an integral exhaust gas recirculation valve.

## Revendications

1. Circuit d'admission d'air pour un moteur à combustion interne, qui présente un carter (2) dans lequel sont réalisés un collecteur d'admission (18), des conduits d'admission d'air (3) individuels menant aux cylindres du moteur à combustion interne et un conduit de recyclage des gaz d'échappement (4) configuré en coupe transversale avec une ouverture unilatérale dans la direction d'écoulement, une unité de transfert thermique (6), en correspondance avec le conduit de recyclage des gaz d'échappement (4), étant disposée dans ce dernier, **caractérisé en ce que** l'unité de transfert thermique (6) forme une première partie d'un dispositif de refroidissement (5) et ferme le conduit de recyclage des gaz d'échappement (4), l'unité de transfert thermique (6) présentant un premier conduit de refroidissement (7) balayé par du liquide de refroidissement, configuré en coupe transversale avec une ouverture unilatérale dans la direction d'écoulement et fermé par une seconde partie (15) du dispositif de refroidissement (5).

2. Circuit d'admission d'air suivant la revendication 1, **caractérisé en ce que** le conduit de refroidissement (7) est disposé essentiellement au centre du conduit de recyclage des gaz d'échappement (4).

3. Circuit d'admission d'air suivant l'une des revendications 1 et 2, **caractérisé en ce que** l'unité de transfert thermique (6) présente une bride (13) par l'intermédiaire de laquelle est assurée la fermeture du conduit de recyclage des gaz d'échappement (4), et que la seconde partie (15) du dispositif de refroidissement (5) présente une seconde bride (16) et, sur les extrémités disposées en vis-à-vis dans la direction d'écoulement, une tubulure d'admission (9) et une tubulure de sortie (10) du liquide de refroidissement adaptables, la fermeture du conduit de refroidissement (7) étant assurée par l'intermédiaire de la seconde bride (16) au moins dans la zone comprise entre les tubulures (9, 10).

4. Circuit d'admission d'air suivant la revendication 3, **caractérisé en ce que** la bride (16) de la seconde partie (15) ferme le conduit de refroidissement (7) de façon périphérique.

5. Circuit d'admission d'air suivant l'une des revendications 1 à 3, **caractérisé en ce qu'**un second conduit de refroidissement (19) est disposé entre des conduits (3, 18), véhiculant essentiellement de l'air frais, du circuit d'admission d'air (1) et le conduit de recyclage des gaz d'échappement (4) du circuit d'admission d'air (1), lequel conduit sépare thermiquement les conduits de passage d'air frais (3, 18) du conduit de recyclage des gaz d'échappement (4).

6. Circuit d'admission d'air suivant la revendication 5, **caractérisé en ce que** le second conduit de refroidissement (19) a un balayage forcé par le liquide de refroidissement, la bride (16) de la seconde partie (15) du dispositif de refroidissement (5) présentant un renflement (20, 21) dans la zone de la tubulure d'admission (9) et de la tubulure de sortie (10), de sorte qu'une liaison fluidique entre le premier conduit de refroidissement (7) et le second conduit de refroidissement (19) existe uniquement dans ces zones.

7. Circuit d'admission d'air suivant la revendication 6, **caractérisé en ce que** la bride (16) de la seconde partie (15) du dispositif de refroidissement (5) ferme les deux conduits de refroidissement (7, 19) de façon périphérique.

8. Circuit d'admission d'air suivant l'une des revendications précédentes, **caractérisé en ce que** les fermetures des conduits (4, 7, 19) balayés par l'écoulement sont réalisées par des assemblages par alliance de matière.

9. Circuit d'admission d'air suivant la revendication 8, **caractérisé en ce que** les assemblages par alliance de matière sont réalisables par des soudures (14, 22), en particulier par soudage par friction par agitation de la baguette d'apport.

10. Circuit d'admission d'air suivant l'une des revendications précédentes, **caractérisé en ce qu'**une gorge (8) s'étendant linéairement dans la direction d'écoulement, de configuration essentiellement rectangulaire en coupe transversale, forme le conduit de refroidissement (7) dans l'unité de transfert thermique (6).

11. Circuit d'admission d'air suivant l'une des revendications précédentes, **caractérisé en ce que** l'unité de transfert thermique (6) présente des ailettes de refroidissement (12) dirigées vers le côté gaz d'échappement.

12. Circuit d'admission d'air suivant la revendication 11, **caractérisé en ce que** les ailettes de refroidissement (12) ont une réalisation structurée dans la direction d'écoulement, l'aire de la section balayée restant essentiellement égale dans la direction d'écoulement.

13. Circuit d'admission d'air suivant l'une des revendications précédentes, **caractérisé en ce que** l'unité de transfert thermique (6) présente au moins une traverse (11) disposée dans le conduit de refroidissement (7) et s'étendant dans la direction d'écoulement du conduit (7).

14. Circuit d'admission d'air suivant l'une des revendications 3 à 13, **caractérisé en ce que** la bride (16) de la seconde partie (15) du dispositif de refroidissement (5) présente, entre la tubulure d'admission (9) et la tubulure de sortie (10), une traverse dirigée dans le conduit de refroidissement (7) et s'étendant dans la direction d'écoulement.

15. Circuit d'admission d'air suivant l'une des revendications 3 à 13, **caractérisé en ce que** la bride (16) de la seconde partie (15) du dispositif de refroidissement (5) présente dans la direction d'écoulement une traverse (17) juste avant la tubulure de sortie (10).

16. Circuit d'admission d'air suivant l'une des revendications précédentes, **caractérisé en ce que** le carter (2) du circuit d'admission d'air (1) et le dispositif de refroidissement (5) sont fabriqués dans un procédé de coulée, au moins une partie du carter (2) étant coulée d'une seule pièce avec le conduit de recyclage des gaz d'échappement (4) et éventuellement avec le second conduit de refroidissement (19).

17. Circuit d'admission d'air suivant la revendication 16, **caractérisé en ce que** le procédé de coulée est un procédé de coulée sous pression, en particulier de coulée d'aluminium sous pression.

18. Circuit d'admission d'air suivant l'une des revendications précédentes, **caractérisé en ce que** le circuit d'admission d'air (1) présente en supplément une unité de clapet d'étranglement intégrée et/ou une soupape de recyclage des gaz d'échappement intégrée.
